# DEMANDE DE BREVET EUROPEEN

(11) **EP 2 251 828 A1**
(43) Date de publication de la demande: **17.11.2010**
(21) Numéro de dépôt: 10162038.3
(22) Date de dépôt: 05.05.2010
(51) Int. Cl.: G06Q 30/00

(54) **Dispositif et procédé de mise à jour d'un profil utilisateur**

(30) Priorité: 15.05.2009 FR 0953250
(71) Demandeur: France Telecom, 75015 Paris (FR)
(72) Inventeur: Meyer, Franck, 22300, Lannion (FR); Schluth, Julien, 22300, Lannion (FR); Hembert, Damien, 22300, Lannion (FR)

(57) **Abrégé**

L'invention se rapporte à un dispositif de mise à jour d'un profil utilisateur stocké dans une mémoire accessible par le dispositif, comportant un écran de visualisation (11) pour visualiser une interface graphique (12) représentant une fiche produit dans laquelle une pluralité de descripteurs est affichée. Ce dispositif est tel que chacun des descripteurs d'au moins une partie de la pluralité de descripteurs de la fiche produit affichée est associé à un indicateur d'intérêt lié au profil utilisateur et représenté par une illustration sur l'interface graphique(23A, 23b, 23c, 23d, 23e)
et en ce qu'il comporte des moyens d'interface utilisateur (18) pour sélectionner une illustration représentant un indicateur d'intérêt pour un descripteur de la fiche produit et pour sélectionner une illustration parmi un ensemble d'illustrations représentant différents niveaux d'intérêt, le niveau d'intérêt correspondant à l'illustration sélectionnée étant mémorisé pour la mise à jour du profil utilisateur.

L'invention se rapporte également à un procédé de mise à jour d'un profil utilisateur et à un procédé de recommandation utilisant un tel profil.

## Description

La présente invention se rapporte à un dispositif de mise à jour d'un profil utilisateur comportant des caractéristiques de préférences de l'utilisateur, la mise à jour s'effectuant par l'intermédiaire d'une interface graphique et de moyens d'interface utilisateur.

Un profil utilisateur peut être notamment utilisé dans le domaine des moteurs de recherche pour une recherche personnalisée, il peut également être utile dans le domaine de vente en ligne ou proposition de services en ligne où les produits ou services proposés à l'utilisateur sont sélectionnés en fonction des préférences indiqués dans le profil utilisateur.

Les applications de recommandations de services, produits ou contenus sont nombreux et nécessitent, pour les systèmes de filtrage thématique, une configuration efficace du profil utilisateur pour obtenir une recommandation intéressante.

Dans les services de commerce en ligne ou de consultations de produits multimédias comme par exemple le système actuel de vente en ligne de produits multimédia du site Internet www.Amazon.fr, l'utilisateur a la possibilité de visionner une fiche produit décrivant les caractéristiques du produit et de donner son avis sur le produit en question.

Cet avis peut être utilisé ensuite pour effectuer des recommandations d'autres produits à l'utilisateur. Cette recommandation est cependant grossière puisqu'elle ne repose que sur l'appréciation de produits comportant de nombreuses caractéristiques différentes.

Pour pouvoir affiner son profil utilisateur, l'utilisateur doit accéder à une fiche de configuration de son profil. Un menu ou écran de configuration particulier est alors affiché à l'utilisateur pour qu'il spécifie ses préférences.

Ainsi, avant de pouvoir bénéficier d'une recommandation personnalisée ou d'un affichage d'informations personnalisées, l'utilisateur doit remplir une fiche mentionnant ses préférences sur des thèmes ou produits particuliers afin de définir son profil.

Cette sélection dans un menu ou écran de configuration de préférences peut devenir fastidieux pour l'utilisateur qui doit donner ses préférences sur un grand nombre de thèmes ou produits, en une seule fois. Cette étape de configuration est une étape préalable au service proposé par l'utilisateur, elle demande donc un temps non négligeable pour l'utilisateur.

Cette étape de configuration est couteuse en temps et augmente la complexité des services offerts à l'utilisateur.

Il existe donc un besoin pour réduire la complexité et le temps de mise à jour de profil utilisateur.

La présente invention vient améliorer cette situation.

A cet effet, l'invention propose un dispositif de mise à jour d'un profil utilisateur stocké dans une mémoire accessible par le dispositif, comportant un écran de visualisation pour visualiser une interface graphique représentant une fiche produit dans laquelle une pluralité de descripteurs est affichée. Le dispositif est tel que chacun des descripteurs d'au moins une partie de la pluralité de descripteurs de la fiche produit affichée est associé à un indicateur d'intérêt lié au profil utilisateur et représenté par une illustration sur l'interface graphique et qu'il comporte des moyens d'interface utilisateur pour sélectionner une illustration représentant un indicateur d'intérêt pour un descripteur de la fiche produit et pour sélectionner une illustration parmi un ensemble d'illustrations représentant différents niveaux d'intérêt, le niveau d'intérêt correspondant à l'illustration sélectionnée étant mémorisé pour la mise à jour du profil utilisateur.

Ainsi, l'affichage d'une fiche produit décrivant un seul produit, permet à l'utilisateur de définir ses préférences en attribuant des niveaux d'intérêts aux descripteurs décrivant le produit.

Ces descripteurs notés permettent ainsi de mettre à jour le profil de l'utilisateur sans passer par une étape proprement dite de configuration du profil ou un menu spécifique de configuration.

La simple consultation de page électronique décrivant un produit offre la possibilité à l'utilisateur d'affiner son profil ou encore de le modifier, en indiquant ses intérêts sur une pluralité de descripteurs.

Ainsi, l'utilisateur ne perd pas de temps pour configurer son profil et peut le faire au fur et à mesure de la consultation qu'il peut avoir sur différents produits.

L'interface qui lui est proposée est de plus très simple et lui facilite la tâche de configuration.

Les différents modes particuliers de réalisation mentionnés ci-après peuvent être ajoutés indépendamment ou en combinaison les uns avec les autres, avec les caractéristiques mentionnées ci-dessus.

Selon un mode possible de réalisation, l'interface graphique représentant une fiche produit comporte en outre un indicateur d'intérêt sur le produit, configurable par les moyens d'interface utilisateur.

Ainsi, l'utilisateur peut non seulement spécifier ses préférences sur les descripteurs du produit affiché mais également sur le produit lui-même, ce qui donne encore une autre information pour définir son profil utilisateur.

Selon un mode particulier de réalisation, l'ensemble d'illustrations représentant différents niveaux d'intérêt est composé d'icônes affichés par l'écran de visualisation, représentant des visages avec des expressions de mécontentements ou de contentement de degrés différents.

Une simple sélection d'une illustration représentant le niveau d'intérêt à spécifier pour un descripteur donné va déclencher l'affichage de plusieurs niveaux possible. Cette interaction avec l'utilisateur est donc très simple.

Dans un mode de réalisation avantageux, l'indicateur d'intérêt du produit est utilisé pour une mise à jour des indicateurs d'intérêts correspondant à au moins une partie des descripteurs du produit pour une mémorisation dans le profil utilisateur.

Ainsi, une configuration implicite du profil utilisateur est possible. En plus des informations réellement entrées par l'utilisateur sur des descripteurs de certaines fiches produit, l'appréciation donnée par l'utilisateur sur le produit lui-même, permet d'attribuer de façon automatique, des niveaux d'intérêts sur certains descripteurs du produit en question afin de mettre à jour de façon automatique le profil de l'utilisateur.

Dans un mode particulier de réalisation, une mise à jour de descripteurs mémorisés dans le profil utilisateur est en outre effectuée en prenant en compte l'usage par l'utilisateur de la fiche produit affichée.

Ainsi, une mise à jour implicite du profil utilisateur est possible. Les tâches que l'utilisateur effectue suite à l'affichage d'une fiche produit, montre son degré d'intérêt pour le produit et sert donc à mettre à jour son profil de façon transparente pour lui.

Avantageusement, l'écran d'affichage prend en compte les indicateurs d'intérêts mémorisés pour l'affichage des descripteurs d'une nouvelle fiche produit.

Lorsque l'utilisateur affiche une nouvelle fiche produit, il voit donc les indicateurs d'intérêt qu'il a déjà spécifiés lors de la consultation antérieure de fiches produits ou après une configuration implicite des indicateurs, pour les descripteurs commun à cette nouvelle fiche.

Cela lui apporte donc une information immédiate sur l'intérêt que peut lui apporter ce nouveau produit.

Dans un mode de réalisation particulier, l'interface graphique représentant la fiche produit, comporte en outre l'affichage d'une liste de produits ayant le plus de descripteurs en commun avec le produit de ladite fiche.

Ainsi, une sélection possible de produit adapté aux descripteurs des produits consultés est proposée à l'utilisateur pour qu'il puisse facilement sélectionner d'autres produits susceptibles de l'intéresser.

L'invention se rapporte également à un terminal multimédia comportant un dispositif tel que décrit ci-dessus.

Ce terminal peut être par exemple un ordinateur, un lecteur de fichier multimédias, un téléphone mobile, un décodeur TV connecté à un écran de télévision ou plus généralement tout terminal multimédia.

L'invention se rapporte également à un procédé de mise à jour d'un profil utilisateur à partir d'une interface graphique représentant une fiche produit dans laquelle une pluralité de descripteurs du produit est affichée. Le procédé est tel que chacun des descripteurs d'au moins une partie des descripteurs de la fiche produit est associé à un indicateur d'intérêt lié au profil utilisateur et représenté par une illustration et qu'il comporte les étapes suivantes:
- sélection d'une illustration représentant un indicateur d'intérêt pour un descripteur de la fiche produit;
- affichage d'un ensemble d'illustrations représentant différents niveaux d'intérêts;
- sélection d'une illustration dans l'ensemble affiché;
- mise à jour du profil utilisateur par mémorisation du niveau d'intérêt correspondant à l'illustration sélectionnée pour le descripteur correspondant.

Elle se rapporte aussi à un procédé de recommandation de produits qui prend en compte un profil utilisateur mis à jour selon un procédé tel que décrit ci-dessus.

En effet, un profil utilisateur bien défini peut permettre d'obtenir une meilleure recommandation de produits pour l'utilisateur.

Enfin, l'invention se rapporte un programme informatique comportant des instructions de code pour la mise en oeuvre d'un procédé de mise à jour d'un profil utilisateur tel que décrit ci-dessus, lorsque celles-ci sont exécutées par un processeur.

D'autres caractéristiques et avantages de l'invention apparaîtront plus clairement à la lecture de la description suivante, donnée uniquement à titre d'exemple non limitatif, et faite en référence aux dessins annexés, sur lesquels:
- la figure 1 illustre un dispositif de mise à jour d'un profil utilisateur selon un mode de réalisation de l'invention;
- la figure 2 illustre un exemple d'interface graphique d'une fiche produit avec des descripteurs à mettre à jour selon un mode de réalisation de l'invention;
- la figure 3 illustre sous forme d'organigramme, les étapes du procédé de mise à jour d'un profil utilisateur selon un mode de réalisation de l'invention;
- la figure 4a illustre un exemple du contenu de la base de données produits selon un mode de réalisation de l'invention;
- la figure 4b illustre un exemple du contenu de la base de données des profils utilisateurs selon un mode de réalisation de l'invention;
- la figure 4c illustre des exemples de pondération pour des usages utilisateur, stockés dans la base de données des profils utilisateurs;
- la figure 4d illustre des exemples d'attribution d'une note pour un type d'action;
- la figure 5 illustre sous forme d'organigramme, les étapes mises en oeuvre pour mettre à jour de manière implicite un profil utilisateur selon un mode de réalisation de l'invention; et
- la figure 6 illustre sous forme d'organigramme les étapes d'un procédé de recommandation selon un mode de réalisation de l'invention.

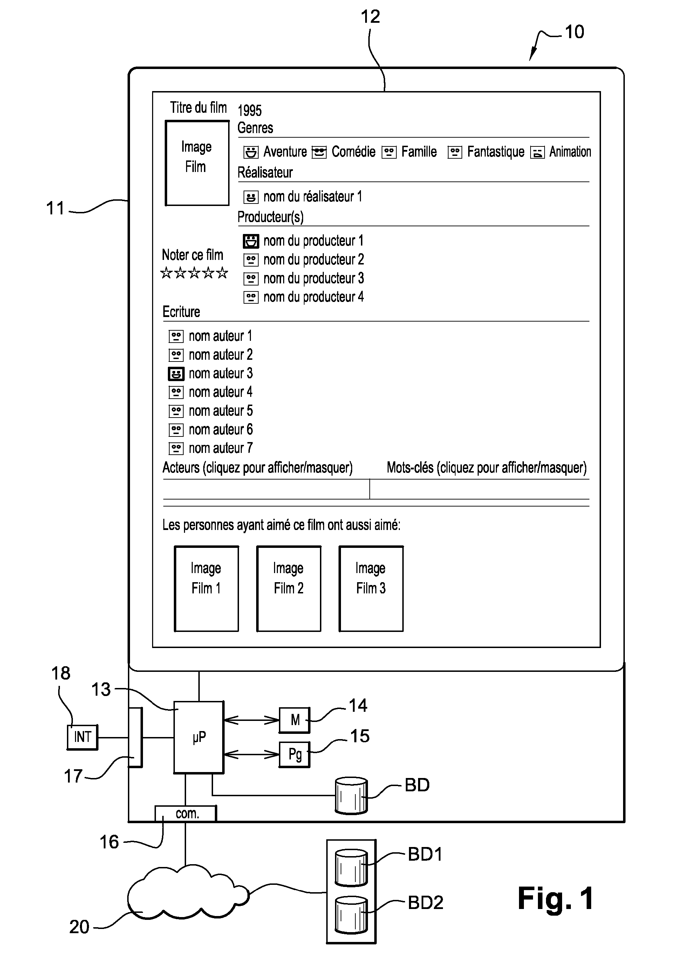

La **figure 1** représente un dispositif de mise à jour d'un profil utilisateur selon un mode de réalisation de l'invention. Typiquement, ce dispositif peut être intégré dans un ordinateur, un lecteur de fichiers multimédia, un terminal de communication tel qu'un téléphone mobile, un décodeur TV connecté à un téléviseur ou plus généralement tout équipement multimédia.

Ce dispositif 10 comporte un écran de visualisation 11 sur lequel est affichée une interface graphique 12. Lors de l'affichage d'une fiche produit décrivant par exemple un produit en vente, pour une application de vente en ligne, l'interface affiche une description de ce produit par ses différentes caractéristiques.

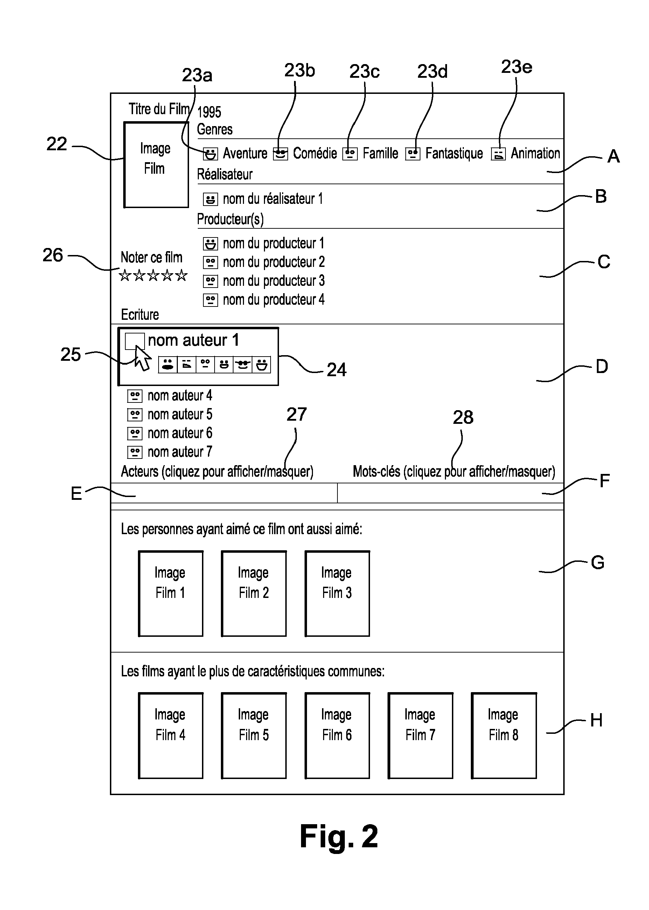

Une fiche produit telle qu'affichée sur cet écran de visualisation comporte une pluralité de descripteurs. Dans l'exemple tel qu'illustré sur la figure 1 et repris plus en détails en référence à la figure 2, le produit est ici un DVD décrivant un film. Les descripteurs de ce film sont par exemple le genre du film comme aventure, comédie, drame, fantastique, animation, etc..., les noms des producteurs de ce film, le nom des auteurs, le nom des acteurs ou encore des mots clés portant sur l'histoire du film présenté.

Selon l'invention, chacun des descripteurs d'au moins une partie des descripteurs de la fiche produit, est associé à un indicateur d'intérêt illustré sur l'interface graphique. L'indicateur d'intérêt représente l'intérêt que l'utilisateur porte à ce descripteur particulier. Les illustrations de ces indicateurs d'intérêts représentent ici des visages avec des expressions différentes. Ainsi, par exemple sur un genre comédie, l'utilisateur peut choisir un indicateur d'intérêt avec une illustration de visage joyeux pour montrer son fort intérêt pour les films de genre comédie. Au contraire, l'utilisateur peut choisir une illustration représentant un visage très triste pour montrer qu'il n'aime pas les films de genre comédie.

Ainsi, sur cette interface graphique d'une fiche produit, l'utilisateur peut sélectionner un indicateur d'intérêt à l'aide de l'interface utilisateur. En sélectionnant un indicateur à configurer, l'utilisateur a le choix entre différents indicateurs d'intérêt que l'on décrira en référence à la figure 2.

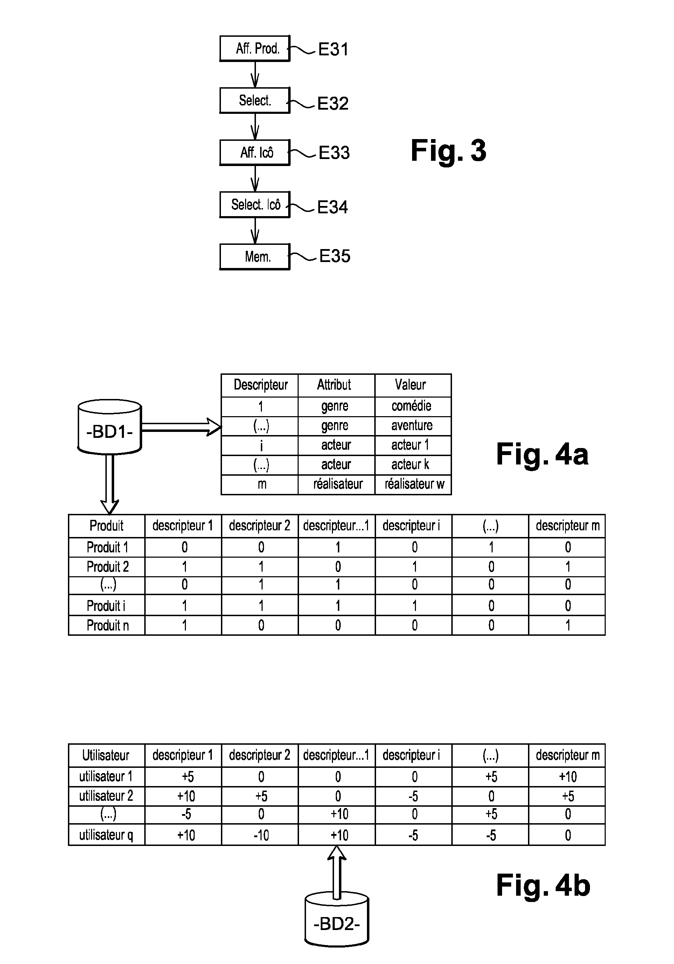

Ce dispositif comporte en outre, une unité de traitement 13 munie d'un microprocesseur, reliée à une mémoire 14. L'unité de traitement est pilotée par un programme informatique 15 afin de mettre en oeuvre notamment le procédé de mise à jour d'un profil de l'utilisateur selon un mode de réalisation de l'invention décrit ultérieurement en référence à la figure 3.

Le programme informatique comporte des instructions de code pour mettre en oeuvre les étapes du procédé de mise à jour du profil utilisateur et notamment les étapes de:
- sélection d'une illustration représentant un indicateur d'intérêt pour un descripteur de la fiche produit;
- affichage d'un ensemble d'illustrations représentant différents niveaux d'intérêts;
- sélection d'une illustration dans l'ensemble affiché;
- mise à jour du profil utilisateur par mémorisation du niveau d'intérêt correspondant à l'illustration sélectionnée pour le descripteur correspondant.

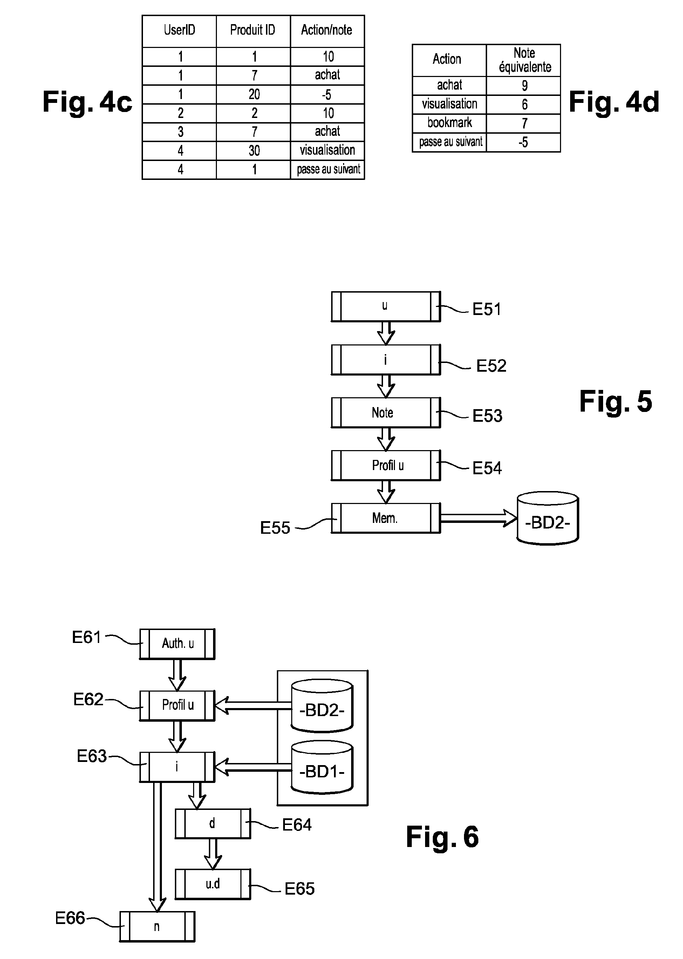

Le programme informatique peut également mettre en oeuvre les étapes d'un procédé de recommandation tel que décrit en référence à la figure 6.

Il peut également mettre en oeuvre les étapes de mise à jour implicite d'un profil utilisateur telles que décrites en référence à la figure 5.

L'unité de traitement reçoit via un module d'entrée 17, des instructions d'une interface utilisateur 18, par exemple une souris d'ordinateur ou tout autre moyen de sélection par l'utilisateur sur l'écran de visualisation. L'unité de traitement reçoit donc les indicateurs d'intérêts choisis par l'utilisateur sur l'interface graphique de la fiche produit, pour certains descripteurs.

Ces indicateurs d'intérêt sont alors mémorisés dans une mémoire accessible par le dispositif 10. Cette mémoire peut par exemple être une mémoire interne telle qu'une base de données BD ou peut être externe, telle qu'une base de données BD2 contenu dans un serveur et accessible par le dispositif 10 via un module de communication 16 et un réseau de communication 20.

D'autres types de mémoire peuvent bien entendu être envisagés comme des supports mémoire amovibles.

Le dispositif 10 a accès à une première base de données BD1 stockée par exemple sur un serveur proposant un service de consultation ou de vente en ligne et qui comporte toutes les caractéristiques liées aux produits présentés à l'utilisateur. Cette base de données comporte les descripteurs des différents produits.

Le dispositif a accès à la base de données BD2 pour stocker dans un premier temps les indicateurs d'intérêt choisis par l'utilisateur et pour mettre à jour le profil de l'utilisateur ou le créer pour un nouvel utilisateur.

Le serveur hébergeant les bases de données BD1 et BD2 peut lui même mettre en oeuvre les étapes d'un procédé de recommandation décrit ultérieurement en référence à la figure 6 et les étapes de mises à jour implicite d'un profil utilisateur décrit en référence à la figure 5.

Les figures 4a et 4b représentent des exemples de contenus de ces bases de données.

Lorsque le dispositif affiche une fiche produit, l'unité de traitement prend en compte le profil de l'utilisateur qu'il récupère dans la base de donnée BD2 via un réseau de communication ou dans sa base de donnée interne BD pour afficher les icônes correspondants aux indicateurs d'intérêts que l'utilisateur a déjà configurés pour des descripteurs communs avec cette fiche affichée.

L'utilisateur peut ainsi, d'un premier coup d'oeil, se rendre compte de l'intérêt que ce produit peut lui porter. Il peut modifier également les indicateurs d'intérêt qu'il avait déjà configurés ou en configurer d'autres. Il le fait cependant en même temps qu'il consulte une fiche produit, ce qui lui fait gagner du temps. Il n'a pas besoin de passer par un écran de configuration spécifique.

En référence à la **figure 2****,** nous allons à présent détailler l'interface graphique représentant une fiche produit.

Dans l'exemple ici représenté, le produit est un DVD d'un film. Il peut bien entendu s'agir de tout type de produit à consulter sur un écran de visualisation. Le produit peut être de la musique, des objets, des livres, des contenus videos, etc.... Ces produits ont alors des descripteurs qui leurs sont propres.

Dans le cas présent, une image de la jaquette du DVD à consulter est affiché en 22. Le titre du film en question est également affiché ainsi que par exemple son année de sortie.

Dans une première fenêtre, A, les descripteurs de genre du film sont affichés. Il s'agit ici d'un film d'aventure, de comédie, de famille, fantastique et d'animation.

A chacun de ces descripteurs, est associé un icône que l'utilisateur peut configurer. L'icône représenté illustre un visage qui peut avoir plusieurs expressions. Ainsi, on peut voir en 23a que pour le genre aventure, l'icône représente un visage réjoui, alors que sur le genre animation, l'icône représente un visage assez mécontent.

Pour accentuer l'effet visuel de ces représentations, des couleurs différentes peuvent également être prévues pour ces différents icônes.

Une deuxième fenêtre B peut de la même façon représenter des descripteurs comportant le nom du réalisateur.

Une troisième fenêtre C comporte ici les noms des différents producteurs de ce film ainsi que leurs icônes associés.

Une autre fenêtre D comporte les noms des auteurs. Les fenêtres E et F comportent par exemple les noms des acteurs ou les différents mots clés définissant le film. Ces noms peuvent être masqués ou au contraire visualisés selon que l'utilisateur choisi de les afficher ou non en cliquant sur la bonne option.

Lorsque l'utilisateur veut définir ou modifier un indicateur d'intérêt pour un des descripteurs, il pointe en 25 par exemple, avec son dispositif de pointage tel que la souris, sur l'icône du descripteur en question. En sélectionnant cet icône, par exemple en cliquant sur la souris, une fenêtre 24 s'ouvre avec un ensemble d'illustrations représentant différents niveaux d'intérêt que l'utilisateur peut choisir.

Dans le cas présent, six niveaux d'intérêts représentés sous forme d'icônes illustrant des visages d'expressions différentes sont affichés.

L'utilisateur a alors juste à pointer sur l'icône qui représente l'intérêt qu'il porte sur le descripteur.

Cette sélection est alors prise en compte par le module de traitement décrit en référence à la figure 1 pour stocker l'indicateur d'intérêt correspondant dans la base de données BD2 et mettre à jour le profil de l'utilisateur dans cette base de données.

L'icône représentant un visage inexpressif représente ici le fait que l'utilisateur n'a pas d'opinion sur le descripteur choisi. C'est cet icône qui est affiché par défaut pour les descripteurs qui n'ont pas encore été notés par l'utilisateur.

L'utilisateur peut également noter le produit lui-même, de façon globale, en indiquant une note d'appréciation sur le produit. L'attribution de cette note est par exemple comme illustré en 26 sous forme d'étoiles que l'utilisateur colorise en cliquant dessus. Plus le nombre d'étoiles colorisées est important, plus l'intérêt pour le produit est également important.

Cette information sur l'appréciation du produit est également stockée dans la base de données BD2 et peut servir à mettre à jour le profil utilisateur de manière implicite comme explicité ultérieurement en référence à la figure 5.

L'interface graphique comporte aussi des fenêtres G et H dans lesquelles, des recommandations d'autres films sont faites. Ces recommandations peuvent par exemple être en fonction de l'intérêt que d'autres utilisateurs ont eu sur ce film et sur d'autres films ou encore en fonction du nombre de descripteurs en commun avec d'autres films.

Bien entendu, le nombre de descripteurs, de fenêtres, peut être différent et la disposition de ces caractéristiques n'est pas figée à l'exemple illustré ici. Des dispositions ou options différents peuvent être prévus pour mettre en oeuvre l'invention.

La **figure 3** représente les étapes principales d'un procédé de mise à jour d'un profil utilisateur. Une première étape E31 consiste à afficher (Aff.Prod.) une fiche produit comportant une pluralité de descripteurs. Pour au moins une partie de ces descripteurs, un indicateur d'intérêt représenté par une illustration, par exemple un icône, est associé.

A l'étape E32, l'utilisateur sélectionne (Select.) une illustration représentant un indicateur d'intérêt pour un descripteur de la fiche affichée. Cette étape est suivie d'une étape E33 d'affichage (Aff.Icô) d'un ensemble d'illustrations d'indicateurs d'intérêts de niveaux différents comme illustré en figure 2 précédemment décrite.

A l'étape E34, l'utilisateur sélectionne (Select.Icô) dans cet ensemble d'illustrations, celle qui correspond à l'indicateur d'intérêt qu'il souhaite enregistrer.

L'étape E34 est suivie de l'étape E35 dans laquelle l'indicateur d'intérêt ainsi sélectionné est stocké (Mem.) dans une mémoire ou base de données pour mettre à jour le profil utilisateur concerné.

Afin de connaître l'utilisateur concerné et le profil utilisateur à mettre à jour, une phase d'authentification de l'utilisateur est dans un premier temps possible. Cette phase d'authentification est bien connue des systèmes actuels et ne sera pas décrite ici.

Un exemple de données contenues dans les bases de données BD1 et BD2 telles que décrites en référence à la figure 1 est maintenant décrit.

En référence à la **figure 4a**, la base de données BD1 contenant les données sur les produits et descripteurs associés, est décrite.

Chaque descripteur est une caractéristique d'un produit représenté par un couple (attribut, valeur). Les caractéristiques à valeurs numériques peuvent être regroupées par plages de valeurs.

Cette base de données comporte par exemple pour le cas d'application décrit ici, un premier tableau comportant les descripteurs utilisés pour décrire le produit. Par exemple ici, on peut remarquer qu'un premier descripteur (ligne 1 du tableau de descripteur) associe un attribut "genre" à une valeur "comédie". Un autre type de descripteur i, associe l'attribut "acteur" à la valeur "acteur 1".

Ce tableau de descripteur comporte donc autant de lignes que de descripteurs, un descripteur étant un couple (attribut, valeur).

La base de données BD1 comporte également un deuxième tableau de produit dans lequel une ligne correspond à un produit et une colonne correspond à un descripteur. Une valeur 0 ou 1 est attribuée au couple (produit, descripteur) selon que le produit comporte le descripteur en question ou pas. Ainsi par exemple, la valeur 1 signifie que le descripteur existe pour ce produit et la valeur 0 indique que le descripteur n'existe pas pour ce produit.

Les produits sont donc représentés ici par des vecteurs de descripteurs avec des composantes 0 ou 1.

Dans le cas présent, sur la ligne 1 correspondant au produit 1, on peut remarquer que ce produit n'a pas de descripteurs 1, 2, i et m alors qu'il comporte les descripteurs ...1, et (...). Les tableaux ainsi représentés ont été limités à un nombre prédéfinis de lignes et de colonnes et sont bien sur adaptés en fonction du nombre de produits que le service offre en consultation et le nombre de descripteurs associés.

En référence à la **figure 4b****,** nous allons à présent décrire un exemple de contenu de la base de données BD2 contenant les profils utilisateurs. Une ligne du tableau représente un utilisateur et une colonne représente un descripteur. A chaque couple (utilisateur, descripteur) est associée une note selon les indicateurs d'intérêts que l'utilisateur a pu configurer sur les fiches produits qu'il a pu consulter.

Ainsi, la note est nulle si aucune information sur l'intérêt que l'utilisateur porte sur ce descripteur n'est enregistrée. La note est positive si l'utilisateur a défini un intérêt pour ce descripteur et négative si l'utilisateur a défini un désintérêt pour le descripteur. Plus la note est élevée positivement, plus l'intérêt est fort. Une sélection par l'utilisateur 1 d'un indicateur d'intérêt de forte valeur sur l'interface graphique, pour un descripteur, va augmenter la valeur du couple (utilisateur 1, descripteur) dans le tableau et ainsi mettre à jour le profil de l'utilisateur 1.

Les utilisateurs sont donc représentés ici par des vecteurs de descripteurs avec des composantes compris entre une valeur maximum positive et une valeur maximum négative. Les valeurs maximum étant fonction de l'échelle de notation proposée à l'utilisateur.

Les profils utilisateurs et les produits sont ici représentés à partir du même espace vectoriel construit sur m descripteurs.

La base de données BD2 peut également comporter une autre table qui prend en compte la note qu'un utilisateur a pu mettre sur le produit dans sa globalité comme expliqué en référence à la figure 2, ou qui prend en compte l'usage que l'utilisateur fait de la fiche produit affichée.

Ainsi, le tableau défini en figure 4c représente pour un utilisateur donné (userID) et un produit donné (ProduitID) soit la note attribuée, soit l'action effectuée sur le produit comme l'action d'achat, de visualisation ou de passage au produit suivant.

Pour un type d'action donné, une note est définie selon le tableau représenté en référence à la figure 4d. Ainsi, un exemple de note donné pour l'action est "achat" est de 9 selon la figure 4d, pour une action de visualisation, une note de 6 est attribuée, pour une action d'enregistrement de la fiche produit dans les favoris de l'utilisateur "bookmark", la note est de 7 et pour l'action de passage au produit suivant, la note est de -5.

Ces attributions de note sont bien évidemment des exemples de réalisation possibles. Toutes autres valeurs de notes sont possibles et d'autres types d'actions sont également envisageables.

Ces attributions de notes vont servir à mettre à jour les profils utilisateurs de manière implicite selon un exemple de procédé décrit maintenant en référence à la **figure 5****.**

Cette figure 5 illustre les étapes principales d'une mise à jour implicite du profil utilisateur dans un mode optionnel de réalisation, en fonction d'une part de la note globale que l'utilisateur a pu attribuer au produit qu'il a consulté et également en fonctions des usages que l'utilisateur a fait de sa consultation du produit.

Ainsi, l'étape E51 défini l'utilisateur u, par exemple par authentification. A l'étape E52, l'utilisateur visualise un produit i.

Dans le cas où l'utilisateur a donné une note au produit tel que décrit en référence à la figure 2 par exemple, la note est stockée en relation avec le produit i et l'utilisateur u, à l'étape E53. De même, si l'utilisateur effectue une action pour laquelle une note a été définie selon un tableau d'attribution tel que défini par exemple en référence à la figure 4d, alors la note correspondante est mise en relation avec le produit i et l'utilisateur u.

Le vecteur correspondant au produit i est pondéré par la note de l'utilisateur u sur i et est ajouté dans le vecteur profil de l'utilisateur u, à l'étape E54.

Le profil utilisateur u est mis à jour dans la base de données BD2 à l'étape E55.

Selon les descripteurs définissant le produit i tel que représenté dans le tableau 4a, le profil utilisateur u défini au tableau 4b est ainsi mis à jour par pondération des descripteurs correspondants avec la note obtenu en E53.

Ainsi, la configuration de l'indicateur d'intérêt est utilisée pour une mise à jour des indicateurs d'intérêts correspondant à au moins une partie des descripteurs du produit pour une mémorisation dans le profil utilisateur.

Ainsi, lorsque l'utilisateur affichera une fiche produit, le dispositif selon l'invention, en fonction du profil utilisateur ainsi stocké, actualisera les icônes correspondants aux descripteurs pour lesquels une valeur est définie. L'utilisateur pourra ainsi déjà visualiser très rapidement l'intérêt qu'il peut avoir sur le produit affiché.

La mise à jour du profil effectué de manière implicite est effectuée de façon transparente pour l'utilisateur et lui fait également gagner du temps. Cela accélère la mise à jour du profil, l'utilisateur pouvant ensuite modifier de façon simple les indicateurs d'intérêts des descripteurs lors de l'affichage d'une fiche produit comportant les mêmes descripteurs.

Des exemples d'utilisation de profils utilisateurs mis à jour selon le procédé tel que décrit précédemment, sont nombreux.

Ces profils utilisateurs peuvent par exemple être utilisés pour effectuer de la recommandation de produits à un utilisateur particulier.

Un mode de réalisation de ce type de recommandation est maintenant décrit en référence à la figure 6. Cette figure représente les principales étapes d'un procédé de recommandation utilisant un profil utilisateur par exemple tel que configuré selon le procédé décrit en référence à la figure 3.

Ainsi, à l'étape E61, une procédure d'authentification de l'utilisateur u est mise en oeuvre. A l'étape E62, la base de données BD2 comportant les différents profils utilisateurs, est consultée. On en extrait le profil de l'utilisateur u authentifié. Ce profil correspond dans l'exemple illustré ici, à un vecteur comportant les notes ou indicateurs d'intérêt donnés pour différents descripteurs de produits.

A l'étape E63, la base de données BD1 est consultée. Les produits contenus dans cette base de données sont consultés un à un. Pour un produit courant i, on extrait le vecteur de descripteurs d associé, à l'étape E64.

A l'étape E65, le score d'intérêt que l'utilisateur u a sur le produit i, est calculé. Ce score est par exemple le produit scalaire du vecteur de l'utilisateur u par le vecteur de descripteurs d.

A l'étape E66, on récupère un ensemble de n produits pour lesquels les meilleurs scores sont obtenus. Un seuil configurable est par exemple fixé pour déterminer ces meilleurs scores. On obtient ainsi, les n produits susceptibles d'intéresser le plus, l'utilisateur u. Ces produits sont par exemple triés par ordre décroissant de score.

Cette liste de produits est par exemple affichée sur l'interface utilisateur, soit sur une fenêtre de visualisation indépendante et après une requête utilisateur de demande de produits susceptibles de l'intéresser, soit lors de la consultation d'une fiche produit, par exemple sur une fenêtre de type G ou H telle que décrite en référence à la figure 2.

D'autres types d'applications peuvent également utiliser de tels profils utilisateurs.

Une autre application possible peut être une comparaison de différents profils utilisateurs ainsi définis pour trouver des utilisateurs qui ont le plus d'affinités, par exemple ceux qui ont le plus de descripteurs communs notés de façon identique pour les mettre en relation ou encore leurs proposer des services communs.

## Revendications

1. Dispositif de mise à jour d'un profil utilisateur stocké dans une mémoire accessible par le dispositif, comportant un écran de visualisation (11) pour visualiser une interface graphique (12) représentant une fiche produit dans laquelle une pluralité de descripteurs est affichée,
**caractérisé en ce que** chacun des descripteurs d'au moins une partie de la pluralité de descripteurs de la fiche produit affichée est associé à un indicateur d'intérêt lié au profil utilisateur et représenté par une illustration sur l'interface graphique (23a, 23b, 23c, 23d, 23d, 23e)
et **en ce qu'**il comporte des moyens d'interface utilisateur (18) pour sélectionner une illustration représentant un indicateur d'intérêt pour un descripteur de la fiche produit et pour sélectionner une illustration parmi un ensemble d'illustrations représentant différents niveaux d'intérêt, le niveau d'intérêt correspondant à l'illustration sélectionnée étant mémorisé pour la mise à jour du profil utilisateur.

2. Dispositif selon la revendication 1, **caractérisé en ce que** l'interface graphique représentant une fiche produit comporte en outre un indicateur d'intérêt (26) sur le produit, configurable par les moyens d'interface utilisateur.

3. Dispositif selon la revendication 1, **caractérisé en ce que** l'ensemble d'illustrations (24) représentant différents niveaux d'intérêt est composé d'icônes affichés par l'écran de visualisation, représentant des visages avec des expressions de mécontentements ou de contentement de degrés différents.

4. Dispositif selon la revendication 2, **caractérisé en ce** l'indicateur d'intérêt du produit est utilisé pour une mise à jour des indicateurs d'intérêts correspondant à au moins une partie des descripteurs du produit pour une mémorisation dans le profil utilisateur.

5. Dispositif selon la revendication 1, **caractérisé en ce qu'**une mise à jour de descripteurs mémorisés dans le profil utilisateur est en outre effectuée en prenant en compte l'usage par l'utilisateur de la fiche produit affichée.

6. Dispositif selon la revendication 1, **caractérisé en ce que** l'écran d'affichage prend en compte les indicateurs d'intérêts mémorisés pour l'affichage des descripteurs d'une nouvelle fiche produit.

7. Dispositif selon la revendication 1, **caractérisé en ce que** l'interface graphique représentant la fiche produit, comporte en outre l'affichage d'une liste de produits ayant le plus de descripteurs en commun avec le produit de ladite fiche.

8. Terminal multimédia comportant un dispositif selon l'une des revendications 1 à 7.

9. Procédé de mise à jour d'un profil utilisateur à partir d'une interface graphique représentant une fiche produit (E31) dans laquelle une pluralité de descripteurs du produit est affichée, **caractérisé en ce que** chacun des descripteurs d'au moins une partie des descripteurs de la fiche produit est associé à un indicateur d'intérêt lié au profil utilisateur et représenté par une illustration et **en ce qu'**il comporte les étapes suivantes:
- sélection (E32) d'une illustration représentant un indicateur d'intérêt pour un descripteur de la fiche produit;
- affichage (E33) d'un ensemble d'illustrations représentant différents niveaux d'intérêts;
- sélection (E34) d'une illustration dans l'ensemble affiché;
- mise à jour du profil utilisateur par mémorisation (E35) du niveau d'intérêt correspondant à l'illustration sélectionnée pour le descripteur correspondant.

10. Procédé de recommandation de produits **caractérisé en ce qu'**il prend en compte un profil utilisateur mis à jour selon un procédé conforme à la revendication 9.

11. Programme informatique comportant des instructions de code pour la mise en oeuvre d'un procédé de mise à jour d'un profil utilisateur conforme à la revendication 9, lorsque celles-ci sont exécutées par un processeur.
